# EUROPÄISCHE PATENTSCHRIFT

(11) **EP 1 753 972 B1**
(45) Veröffentlichungstag und Bekanntmachung des Hinweises auf die Patenterteilung: **28.12.2011**
(21) Anmeldenummer: 05740260.4
(22) Anmeldetag: 11.05.2005
(51) Int. Cl.: F16G 5/16

(54) **HOCHLEISTUNGS-HYBRIDKEILRIEMEN**
HIGH PERFORMANCE HYBRID V-BELT
COURROIE TRAPEZOIDALE HYBRIDE HAUTEMENT RESISTANTE

(30) Priorität: 22.05.2004 DE 102004025225
(43) Veröffentlichungstag der Anmeldung: 21.02.2007
(73) Patentinhaber: ContiTech Antriebssysteme GmbH, 30165 Hannover (DE)
(72) Erfinder: KAPS, Norbert, 30163 Hannover (DE); SATTLER, Heiko, 30175 Hannover (DE)
(74) Vertreter: Finger, Karsten
(86) Internationale Anmeldenummer: PCT/EP2005/052136
(87) Internationale Veröffentlichungsnummer: WO 2005/114002

(56) Entgegenhaltungen:
- EP-A- 0 994 276
- PATENT ABSTRACTS OF JAPAN Bd. 2003, Nr. 11, 5. November 2003 (2003-11-05) -& JP 2003 191334 A (MITSUBOSHI BELTING LTD), 8. Juli 2003 (2003-07-08)
- PATENT ABSTRACTS OF JAPAN Bd. 2003, Nr. 09, 3. September 2003 (2003-09-03) -& JP 2003 145636 A (MITSUBOSHI BELTING LTD), 20. Mai 2003 (2003-05-20)
- PATENT ABSTRACTS OF JAPAN Bd. 2003, Nr. 12, 5. Dezember 2003 (2003-12-05) -& JP 2003 222197 A (MITSUBOSHI BELTING LTD), 8. August 2003 (2003-08-08)
- PATENT ABSTRACTS OF JAPAN Bd. 2003, Nr. 12, 5. Dezember 2003 (2003-12-05) & JP 2004 106545 A (MITSUBOSHI BELTING LTD), 8. April 2004 (2004-04-08)

## Beschreibung

Die Erfindung betrifft einen Hybridkeilriemen (Hybridring) gemäß dem Oberbegriff des Patentanspruchs.

### Stand der Technik

Ein gattungsgemäßer Hybridkeilriemen zur Übertragung großer Leistungen ist z. B. aus der EP 0 994 276 A1 bekannt

Zur Transmission von Drehbewegungen zwischen mindestens zwei Riemenscheiben weist der vorbekannte Hybridriemen zwei endlose Zugträger (Lastträger) und eine Vielzahl darauf angebrachter, als Stützelemente dienender im Querschnitt konischer Blöcke auf. Die Zugträger sind in Schlitze der Stützelemente eingefügt. Bei Hybridriemen mit zwei Zugträgern sind diese Zugträger in Block-Schlitze eingefügt, die beidseitig von geneigten Seitenflächen gegen den mittleren Bereich der Blöcke verlaufen. Bei Bauformen mit nur einem Zugträger ist dieser analog in einem Schlitz angeordnet.

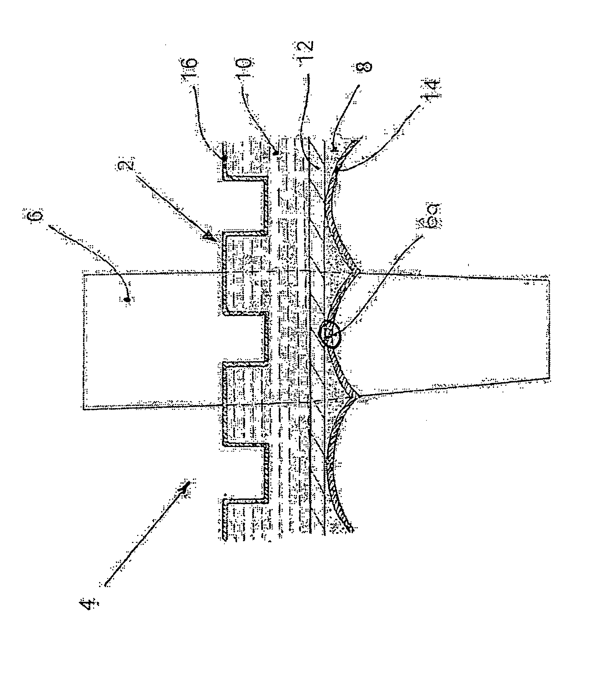

Die Zugträger selbst bestehen aus elastomerem Material und sind mit einer Cordeinlage verstärkt, d. h. die Cordeinlage ist beidseitig von elastomerem Material umgeben. Ober und Unterseite der Zugträger sind üblicherweise mit einem Gewebe bedeckt (siehe z. B. EP 0 994 276 A1, Fig. 8).

Beim Betrieb des gattungsgemäßen, endlos geschlossenen Hybridkeilriemens stützt sich der Cord auf der unteren, radial inneren Gummilage ab, wobei das Gummi sich allmählich zwischen die Stützelemente quetscht und sich so der Verbund zwischen den Blöcken und dem mindestens einen Zugträger lockert. Daraus ergeben sich Nachteile bezüglich der Dauerfestigkeit des Hybridriemens.

Der Aufbau derartiger Zugträger erfolgt radial von innen nach außen in folgender Reihenfolge: Gewebe, Gummiplatte, Cord, Gummiplatte, Gewebe.

Damit ergeben sich folgende fertigungstechnischen Nachteile: Es muss während der Konfektion zweimal eine Gummiplatte aufgelegt werden, wobei auf die erste Gummiplatte der Cord aufgespult wird. Wegen der Nachgiebigkeit des Gummis ist die Position des Cords in radialer Richtung schwer einstellbar, da die Cordlage der Spulspannung, der Viskosität und der Dicke der Gummiplatte unterworfen ist. Außerdem ergeben sich Schwankungen der Cordlage durch Dickentoleranzen der Gummiplatte.

Die Patent Abstracts of Japan Bd. 2003, Nr. 11, 5. November 2003 & JP 2003 191334 A, veröffentlicht am 8. Juli 2003, zeigen einen Hybridkeilriemen, bei dem die im Einbauzustand obere Decklage des elastomeren Zugträgers mit einer Gewebelage versehen ist.

Die Patent Abstracts of Japan Bd. 2003, Nr. 09, 3. September 2003 & JP 2003 145636, veröffentlicht am 20. Mai 2003, zeigen einen Hybridkeilriemen, bei dem die Herstellung auf einem Formrad mit Wickelnasen erfolgt, durch die die Corde der Cordeinlage 5 in Position gehalten werden sollen. Gewebelagen an den Außenseiten des elastomeren Zugträgers sind angesprochen, jedoch nicht näher spezifiziert.

### Aufgabe der Erfindung

Die Aufgabe der vorliegenden Erfindung besteht im Wesentlichen in einer Erhöhung der Dauerfestigkeit eines Hybridkeilriemens.

### Lösung und Vorteile

Anspruchsgemäß besteht die Lehre der Erfindung darin, den Cord direkt auf der unteren, d. h. radial inneren Decklage, die vorzugsweise eine Gewebelage ist, anzuordnen.

Beim Betreiben des Hybridkeilriemens befindet sich im Kontaktpunkt des Cordes (Zugstranges) mit dem Stützelement lediglich die Decklage (Gewebelage) - zum Schutz des Cordes - aber kein Elastomer. D. h.: Der Cord stützt sich auf den jeweiligen Zeniten (Scheitelpunkten) der radial inneren Schlitzflanken der Stützelemente ab und hat nicht mehr die Möglichkeit, das Gummi zu verpressen (d. h. keine Lockerung des Verbundes Blöcke - Zugträger und damit kein radiales Absinken des Cordes innerhalb des Zugträgers durch Nachgeben des Gummis). Durch die Vermeidung von plastischer Verformung ist im Wesentlichen eine längere Lebensdauer zu erwarten. Außerdem verbessert sich der Wirkungsgrad bei der Energieübertragung.

Im Herstellungsprozess wird der Cord direkt auf die erste, als Decklage dienende Gewebelage gespult. Das ermöglicht eine genaue und reproduzierbare Position der Cordlage innerhalb des Riemens. Die radiale Position der Corde im Riemen ist nur noch abhängig von der Dicke der ersten Gewebelage, auf der gespult wird, die im Betrieb nur unwesentlichen Setzerscheinungen ausgesetzt sein wird. Die Spulspannung kann beliebig eingestellt werden. Es können die verschiedensten Cord-Materialien zum Einsatz gelangen: Stahl-Cord, Kohle- oder Glasfasern, Aramid oder Polyester. Bei Verwendung von Kunststoff-Corden besteht die Möglichkeit, den Cord vorzustrecken, so dass die Riemenlängung durch Konstniktionsdehnung des Cordes wegfällt (d. h.: weniger Längung).

Da die sonst übliche, unterhalb der neutralen Faser anzuordnende Gummilage wegfällt, kann der Zugträger insgesamt dünner ausgebildet sein. Damit wird es möglich, die radial inneren Flügel der Stützelemente wesentlich zu verstärken. Das kommt der Quersteifigkeit des Hybridriemens und somit der Dauerfestigkeit des Hybridriemens zugute.

### Zeichnung

Ein Ausführungsbeispiel der Erfindung wird anhand der beigefügten Zeichnung erläutert.

### Beschreibung

Ein Hybridkeilriemen 4 besteht aus mindestens einem Zugträger 2 und einer Vielzahl darauf angebrachter, als Stützelemente dienender Blöcke 6. In der Abbildung ist exemplarisch lediglich ein einziger Block 6 dargestellt.

Der Zugträger 2 selbst besteht aus elastomerem Material 8, 10 und ist mit einer Cordlage 12 verstärkt. Ober- und Unterseite des Zugträgers 2 ist (sind) quergerippt bzw. gewellt und mit einer Decklage, z. B. Gewebe 14 bzw. 16 versehen. Diese gerippte bzw. gewellte Zugträgeroberfläche steht mit einer entsprechend strukturierten Schlitzoberfläche der den Zugträger 2 aufnehmenden Blöcke 6 in Eingriff

Während sich die Cordlage bei herkömmlichen Zugträgern mittig zwischen zwei mehr oder weniger gleichstarken Gummilagen befindet, ist bei dem erfindungsgemäßen Zugträger 2 die Cordlage 12 direkt auf dem radial inneren Gewebe 14 angeordnet, so dass sich der Cord 12 während des Betriebs direkt auf den Stützelementen 6 abstützen kann - lediglich mit einer Gewebelage 14 zum Schutz des Cordes 12 dazwischen. Es kommt zu einer direkten Berührung zwischen Cordlage 12 und der radial inneren Decklage 14 im Bereich der Zenite 6a der unteren Blockschlitzflanken.

Da bezüglich der Cordlage 12 auf eine Rohgummiunterlage verzichtet wird, kann die Spulspannung bei der Herstellung des Zugträgers präzise eingestellt werden. Bei Verwendung von Kunststoff-Fäden kann der Cord 12 zudem in gewünschtem Maße , vorgedehnt werden.

Die zwischen der Cordebene und den unteren Wellenbergen des Zugträgers 2 bestehenden Lücken werden während des unter Druck verlaufenden Vulkanisiervorgangs von der oberhalb der Cordebene aufgetragenen Rohgummiplatte 10 mit Gummi 8 ausgefüllt.

### Bezugszcichenliste

- 2: Zugträger, Lastträger
- 4: Hybridkeilriemen
- 6: Stützelement, Block
- 6a, ...: Zenit(e) [Scheitelpunkt(e)] der unteren Blockschlitzflanke(n)
- 8, 10: elastomeres Material
- 10: Gummilage (Gummiplatte)
- 12: Zugstrang, Cord, Cordlage, Cord-Fäden
- 14: "untere" Decklage; "untere" Gewebelage; erstes, radial inneres Gewebe
- 16: "obere" Decklage; "obere" Gewebelage; zweites, radial äußeres Gewebe

## Patentansprüche

1. Hybridkeilriemen (4),
der mindestens einen Zugträger (2) und eine Vielzahl daran angeordneter, als Stützelemente dienender, im Querschnitt konischer Blöcke (6) aufweist,
wobei der mindestens eine Zugträger (2) aus elastomerem Material besteht und mit einer Cordeinlage (12) verstärkt ist, und dessen beidseitige Oberflächen quergerippt oder gewellt sind und jeweils mit einer Decklage (14, 16) versehen sind,
**dadurch gekennzeichnet,**
**dass** die Cordeinlage (12) direkt auf der unteren, radial inneren Decklage (14) angeordnet ist,
wobei eine direkte Berührung zwischen Cordlage (12) und der radial inneren Decklage (14) in den jeweiligen Zeniten (6a, ...) der unteren Blockschlitzflanken gegeben ist.

## Claims

1. Hybrid V-belt (4), which has at least one tension member (2) and a plurality of cross-sectionally conical blocks (6) arranged thereon and serving as supporting elements, the at least one tension member (2) consisting of elastomeric material and being reinforced with a cord inlay (12), and the surfaces of which on both sides are cross-ribbed or corrugated and respectively provided with an outer layer (14, 16), **characterized in that** the cord inlay (12) is arranged directly on the lower, radially inner cover layer (14), providing direct contact between the cord layer (12) and the radially inner cover layer (14) at the respective zeniths (6a, ...) of the lower block slot flanks.

## Revendications

1. Courroie trapézoïdale hybride (4) qui présente un ou plusieurs renforts de traction (2) sur lesquels sont disposés plusieurs blocs (6) qui servent d'élément de soutien et dont la section transversale est conique,
le ou les renforts de traction (2) étant constitués d'un matériau élastomère et renforcés par une garniture de câble (12), leurs deux surfaces latérales étant nervurées transversalement ou ondulées et chacune étant dotée d'une couche de recouvrement (14, 16),
**caractérisée en ce que**
la garniture de câble (12) est disposée directement sur la couche inférieure et radialement intérieure de recouvrement (14) et
**en ce qu'**un contact direct entre la garniture de câble (12) et la couche radialement intérieure de recouvrement (14) est assuré à chaque zénith (6a, ...) des flancs inférieurs des fentes entre les blocs.
